# EUROPEAN PATENT SPECIFICATION

(11) **EP 0 543 643 B1**
(45) Date of publication and mention of the grant of the patent: **30.10.1996**
(21) Application number: 92310535.7
(22) Date of filing: 18.11.1992
(51) Int. Cl.: B02C 19/14

(54) **Glass vessel crusher**
Zerkleinerer für Glasbehälter
Broyeur pour récipients en verre

(30) Priority: 21.11.1991 JP 332454/91
(43) Date of publication of application: 26.05.1993
(73) Proprietor: Toyo Glass Co., Ltd., Tokyo (JP)
(72) Inventor: Shinpo, Toshio, Fujisawa-shi, Kanagawa-ken (JP); Ueda, Sadao, Kawasaki-shi, Kanagawa-ken (JP); Kitao, Shuji, Yokohama-shi, Kanagawa-ken (JP); Ito, Yoshifumi, Oota-ku, Tokyo (JP)
(74) Representative: Jackson, Peter Arthur

(56) References cited:
- EP-A- 0 396 392
- EP-A- 0 495 420
- AU-A- 455 239
- DE-C- 291 120
- US-A- 4 181 265

## Description

This invention relates to a glass vessel crusher for crushing a glass vessel such as a glass bottle into fragments of appropriate size.

It has been a general habit that a glass vessel such as a glass bottle is used and then thrown away without recycling because a recovery route or system for the glass vessel has not been hitherto established. Such a habit of using and throwing away the glass vessel has caused a waste of natural resources and has been a factor in environmental contamination. The recovery of glass bottles has been particularly shunned because they have a bulky body, so that physical distribution costs are increased and the cost of recovery is also heightened. In order to overcome this disadvantage, it has been conventionally adopted that glass bottles are finely crushed using a glass-bottle crusher and then recovered in a state where their bulkiness is reduced.

As a conventional glass bottle crusher has been known a propeller-type crusher and a squash-type crusher. In the propeller-type crusher, a glass is impacted against a propeller rotating at a high speed, so that it is finely crushed by the collision. On the other hand, in the squash-type crusher, for example, a glass bottle is sandwiched between two iron plates, and then is squashed by pressing the iron plates together.

In the propeller-type crusher, a glass bottle is excessively finely crushed, and thus excessively-fine glass fragments of the glass bottle are generated. If this type of crusher is placed on a street for example, there would occur a new environmental problem that these excessively-fine glass fragments are scattered in the street.

Further, the fragments of the glass bottle which have been recovered are required to be washed with water in a glass factory to remove foreign matters such as metal from the fragments. In this case, fragments whose size is below several millimetres are frequently required to be discarded on the basis of a requirement of water administration. Therefore, if the fragments of a glass bottle are excessively crushed by the crusher, most of fragments which have been withdrawn must be discarded, and thus there occurs a problem that all of glass bottles which have been recovered with much labour cannot be effectively used.

On the other hand, the squash-type crusher has the disadvantage that a tremendous noise occurs in a crushing operation, and glass fragments are liable to be scattered at a throw-in side for a glass bottle. Therefore, this type of crusher is unsuitable to be placed in a street in consideration of security and environmental problems.

An object of this invention is to provide a glass vessel crusher capable of crushing a glass vessel into fragments in a proper size without inducing tremendous noise.

AU-A-455239 discloses a glass vessel crusher comprising an outer part which surrounds an inner part to define therebetween an annular crushing space the cross section of which narrows from a higher end to a lower end of the space, at least one of the outer and inner parts being rotatable about the axis of the crushing space; means for rotating the rotatable part(s); a glass vessel inlet at the higher end of the crushing space; a glass fragment outlet at the lower end of the crushing space; and at least one projection projecting into the crushing space from at least one of the outer and inner parts, and according to the present invention, such a crusher is characterised in that a projection in the form of an elongate member, the length of which extends continuously or intermittently along the surface of the, or one, rotatable part, and which, in conjunction with the direction of rotation, acts to feed the glass along the annular space towards its narrower lower end; and in that the other part is provided with projections in the form of an array of bolts which screw through a wall of that part, the projections from both the parts projecting into a convergent portion of the crushing space.

In use, glass vessels to be crushed are thrown through the inlet into the external part oriented in various directions such as longitudinal, lateral and slant directions in the crushing space at an initial stage. Through rotation of the external or internal part, the glass vessels are scratched while the orientation angle thereof is gradually varied, and then slowly squashed with a relatively weak force between the external and internal parts. Since the glass-vessel crushing space is so designed as to be gradually narrowed along the direction from the throw-in side toward the fragment discharge side, the glass vessels are roughly crushed in a large size at the upper portion of the crushing space, and fall down in the space with being squashed several times, so that the glass vessels are gradually finely crushed while they fall down from the inlet to the fragment outlet. Finally, only those glass fragments which can pass through a gap between an outer peripheral portion at the lower end of the internal part and an inner peripheral portion at the lower end of the external part are discharged to the outside of the external part.

In the accompanying drawings:
Fig. 1 is a longitudinal-sectional view of one embodiment of a glass vessel crusher according to this invention;
Fig. 2 is a longitudinal-sectional view of a main part of the crusher as shown in Fig. 1;
Fig. 3 is a perspective view of the upper and lower walls of the crusher as shown in Fig. 1; and,
Fig. 4 is a perspective view of a throw-in cylinder for a glass bottle which is used for the crusher as shown in Fig. 1.

The following embodiment is described particularly in a case where the crusher is used to crush a glass bottle. However, the invention is applicable to other kinds of glass vessels such as glass plate, glass container, etc.

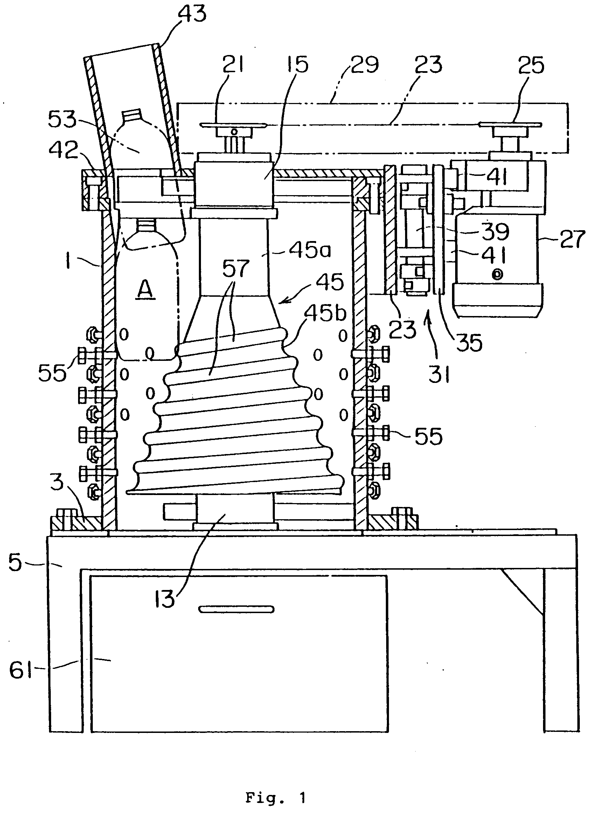

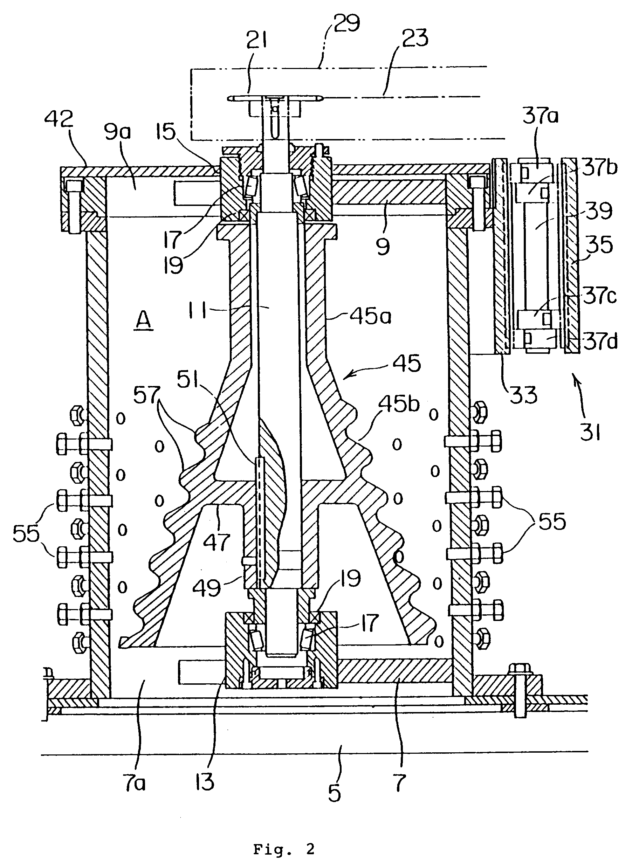

In Fig. 1, a reference numeral 1 represents an external cylindrical part and is secured through a flange 3 to a frame 5. As shown in Fig. 2, a lower wall 7 is mounted to an inner peripheral portion of the lower end of the external part 1 while an upper wall 9 is mounted to an inner peripheral portion of the upper end of the external part 1.

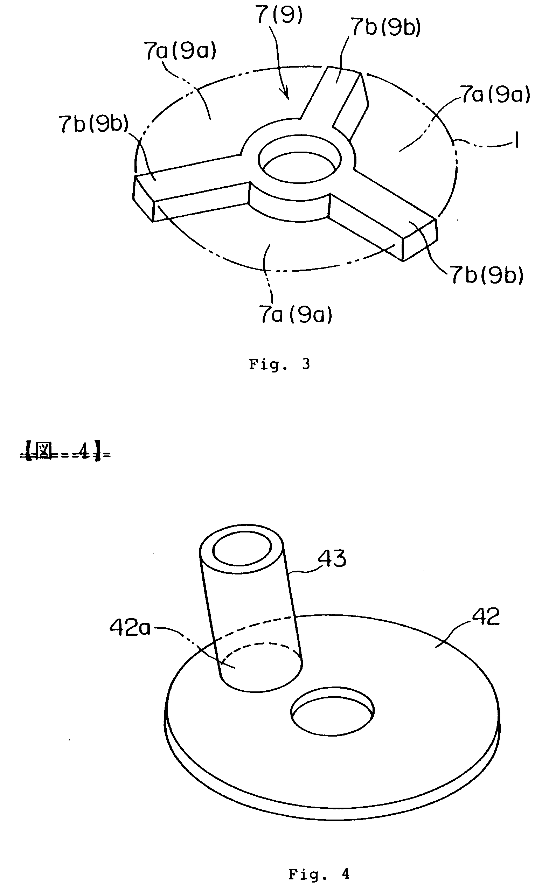

Fig. 3 shows the detailed construction of each of the upper and lower walls 7 and 9. As shown in Fig. 3, each of the upper and lower walls has a ring and three support portions 7b (9b) which are integrally formed with the ring so as to extend radially from the ring. Therefore, when each of the upper and lower walls 7b (9b) is secured to the external part 1, an opening portion 7a (9b) is formed between the neighbouring support portions 7b (9b).

A rotary shaft 11 is suspended between the upper and lower walls 9 and 7, and both end portions of the rotary shaft 11 are freely rotatable supported in bearing housings 13 and 15 which are secured to the lower and upper walls 7 and 9, respectively. Each of the bearing housings 13 and 15 is designed in a symmetrical structure, and a conical bearing 17 for supporting the rotary shaft 11 and an oil seal 19 are accommodated in each of the bearing housings 13 and 15.

The upper end portion of the rotary shaft 11 extends so as to penetrate through the bearing housing 15, and is fixedly secured to a sprocket 21. A chain 23 is entrained between the sprocket 21 and another sprocket 25 which is rotated by a motor 27. Therefore, a rotational force of the motor 27 is transmitted through the sprocket 25 and the sprocket 21 to the rotary shaft 11. A reference numeral 29 represents a chain cover for the chain 23.

The motor 27 is secured to the outer wall of the external part 1 through a securing mechanism 31. The securing mechanism 31 comprises a fixing base 33 which is fixed to the external cylinder 1, and a motor base 35 which is fixed to the motor 27. Both of the fixing base 33 and the motor base 35 are linked with each other through two pairs of bearings 37a to 37d located at the upper and lower sides respectively and a shaft 39 in such a manner that the motor base 35 is freely swingable around the shaft 39. A reference numeral 41 represents a jack bolt.

According to this embodiment, a lid member 42 for closing an upper opening of the external part 1 is further provided at the upper side of the upper wall 9. The lid member 42 has an opening 42a therein, and a throw-in cylinder 43 is slantly engaged with the opening 42a of the lid member 42 as shown in Fig. 4. The throw-in cylinder 43 serves as an inlet through which a glass bottle 53 is thrown into the external part 1.

Inside the external part 1 is disposed an internal rotor part 45 which is rotatable with the rotary shaft 11. The internal part 45 comprises a cylindrical portion 45a serving as an upper portion thereof and a frustoconical portion 45b serving as a lower portion thereof. As in apparent from Fig. 2, the cylindrical portion 45a and the frustoconical portion 45b are formed integrally with each other, and a boss portion 49 is supported through a support 47 on the inner wall of the frustoconical portion 45b. The rotary shaft 11 is engaged with the boss portion 49, and both of the rotary shaft 11 and the boss portion 49 are linked with each other through a key 51.

A crushing space A in which the glass bottle 53 is crushed is defined between the inner wall of the external part 1 and the outer wall of the internal part 45. The crushing space has a ring shape in section, and is so designed as to gradually narrow in a direction from the upper portion of the external part 1 to the lower portion thereof. Therefore, the glass bottle 53 is gradually finely crushed while it falls down along the direction from the upper portion of the external part 1 to the lower portion thereof. In this embodiment, the gradually-narrowing shape of the crushing space is caused by the conical shape of the internal part 45 as shown in Figs. 1 and 2.

In addition, plural bolts 55 are secured to the outer wall of the external part 1 in its axial (longitudinal) direction and in its peripheral direction at a substantially constant interval, and the tip portion of each bolt 55 projects at a suitable length through the side wall of the external part 1 into the crushing space A. The tip portion of the bolt 55 is preferably pointed, and the length at which the tip portion of each bolt 55 projects into the crushing space is preferably variable. The number of the bolts 55 which are located in the peripheral direction on the external part is preferably from 6 to 12, and the bolts 55 which are located in the axial direction on the external part are preferably disposed at an interval of 50 to 70mm.

A helical member 57 is formed on the outer peripheral surface of the conical portion 45b of the internal part 45 in such a manner as to project from the outer peripheral surface into the crushing space A. The helical member 57 and the plural bolts 55 are so disposed that the glass bottle 53 which is thrown into the crushing space A is scraped in cooperation therebetween in the crushing space A. The helical member 57 is not necessarily formed in a continuous body on the internal part, but may be formed in an intermittent body. The direction of the helix, in conjunction with the direction of rotation of the rotor, feeds the glass downwardly with a screw action.

The following features are required for the crusher. Firstly, the noise must be small during a crushing operation, and secondly the glass fragments are not excessively finely crushed. In order to achieve these requirements, various experiments have been attempted. Through these experiments, it has been proved that the glass bottle 53 should be scratched i.e. scored, by scraping against the sharp bolt tips, and then slowly squashed with a relatively weak force to effectively crush the glass bottle 53.

According to this embodiment, the glass bottle 53 which is thrown into the annular crushing space A through the throw-in cylinder 43 is first scratched by the tip portion of the bolts 55 and the spiral member 57, and then gradually squashed with a relatively weak force through the gradually-narrowed crushing space A.

At an initial stage where the glass bottles 53 are thrown into the crushing space A, the glass bottles 53 are located in various orientational directions (longitudinal, lateral and slant directions). When the motor 27 is rotated in this state, interlockingly with the rotation of the internal cylinder 45, the glass bottles 53 are rotated with the orientation directions thereof being varied. Through this operation, the glass bottles 53 are scratched by the bolts 55 and the spiral member 57, and then the scratched glass bottles 53 are slowly squashed between the external part 1 and the internal part 45 with a relatively weak force. In this case, the rotational speed of the internal cylinder is preferably set to 4 to 40 rpm.

The glass bottle 53 roughly crushed at the upper portion of the crushing space A, and the roughly-crushed bottle 53 is squashed several times in the crushing space A while falling down from the upper portion of the crushing space A to the lower portion thereof, so that it is gradually finely crushed. Finally, only those glass fragments which pass through a gap between the outer peripheral portion of the lower end of the internal part 45 and the inner peripheral portion of the lower end of the external part 1 are discharged from the external part 1. The openings 7a of the lower wall 7 serve as a discharge port for the glass fragments, and the crushed glass fragments are stored in a hopper 61 located beneath the discharge port. The hopper 61 can be freely drawn out from the crusher as shown in Fig. 1.

According to the crusher of this embodiment, the glass bottle 53 is crushed by squashing it with a relatively weak force while being scraped. Therefore, in comparison with the conventional crusher, the noise occurring in the crushing operation can be lower and the glass bottle 53 can be crushed into glass fragments of a more convenient size. Accordingly, even if the crusher thus constructed is placed on a street, for example, no environmental problem occurs, so that a recycling system for the glass bottles can be promoted using this crusher.

When the crusher of this embodiment is applied, no restriction is imposed on colour, shape and components of a glass bottle. Further, even when the glass is coated with a label or resin on the surface thereof, it can be easily crushed.

In the above embodiment, the external part 1 is a fixed casing, and the internal part 45 is rotated relatively to the external part 1. However, the external part 1 may be rotatable relatively to an internal part which is fixed. Otherwise, both of the external part and the internal part may be rotatable. Further, at least one of the external part 1 and the internal part 45 may be formed in a frustoconical shape. Therefore, in the illustrated embodiment the internal part 45 is provided with the frustoconical portion 45b, however, the conical portion may be provided on the external part 1.

## Claims

1. A glass vessel crusher comprising an outer part (1) which surrounds an inner part (45) to define therebetween an annular crushing space (A) the cross section of which narrows from a higher end to a lower end of the space, at least one of the outer and inner parts being rotatable about the axis of the crushing space; means (21-27) for rotating the rotatable part(s); a glass vessel inlet (43) at the higher end of the crushing space; a glass fragment outlet (7a) at the lower end of the crushing space; and at least one projection (55,57) projecting into the crushing space from at least one of the outer and inner parts; characterised in that said projection is in the form of an elongate member (57), the length of which extends continuously or intermittently along the surface of the, or one, rotatable part (45), and which, in conjunction with the direction of rotation, acts to feed the glass along the annular space (A) towards its narrower lower end; and in that the other part (1) is provided with projections in the form of an array of bolts (55) which screw through a wall of that part, the projections from both the parts projecting into a convergent portion of the crushing space.

2. A crusher according to claim 1, wherein the elongate member is a helical projection (57).

3. A crusher according to any one of the preceding claims, wherein the outer part is a substantially cylindrical fixed casing (1) and the inner part is a rotor (45) with a downwardly diverging substantially frusto-conical portion (45b).

4. A crusher according to any one of the preceding claims, in which the axis is substantially vertical.

5. A crusher according to any one of the preceding claims, wherein the rotating means (21-27) rotates the rotatable part(s) (45) at a speed of between 4 and 40 rpm.

## Patentansprüche

1. Ein Glasbehälter-Zerkleinerer, umfassend ein ein inneres Teil (45) umgebendes äußeres Teil (1), um zwischen diesen einen ringförmigen Zerkleinerungsraum (A) zu bestimmen, dessen Querschnitt sich von einem oberen Ende zu einem unteren Ende des Raumes verengt, wobei mindestens eines der inneren und äußeren Teile um die Achse des Zerkleinerungsraums drehbar ist; Mittel (21-27) zum Drehen des (der) drehbaren Teils (Teile); einen Glasbehälter-Einlaß (43) am oberen Ende des Zerkleinerungsraums; einen Glasbruchstücke-Auslaß (7a) am unteren Ende des Zerkleinerungsraums; und mindestens einen Vorsprung (55, 57), der von mindestens einem der äußeren und inneren Teile in den Zerkleinerungsraum hineinragt, dadurch gekennzeichnet, daß dieser Vorsprung in Form eines langgestreckten Organs (57) ausgebildet ist, dessen Länge sich kontinuierlich oder absatzweise entlang der Oberfläche der oder des einzigen drehbaren Teile(s) (45) ausdehnt und das in Verbindung mit der Drehrichtung eine Zuführung des Glases entlang des ringförmigen Raums (A) zu dessen engerem unteren Ende bewirkt; und daß das andere Teil (1) mit Vorsprüngen in Form einer Gruppierung von durch eine Wand dieses Teils geschraubten Bolzen (55) versehen ist, wobei die Vorsprünge von beiden Teilen in einen konvergierenden Bereich des Zerkleinerungsraums hineinragen.

2. Ein Zerkleinerer nach Anspruch 1, wobei das langgestreckte Organ ein schraubenwendelartiger Vorsprung (57) ist.

3. Ein Zerkleinerer nach einem der vorhergehenden Ansprüche, wobei das äußere Teil ein im wesentlichen zylindrisches, feststehendes Gehäuse und das innere Teil ein Rotor (45) mit einem nach unten divergierenden, im wesentlichen kegelstumpfförmig-konischen Teil (45b) ist.

4. Ein Zerkleinerer nach einem der vorhergehenden Ansprüche, in dem die Achse im wesentlichen vertikal ist.

5. Ein Zerkleinerer nach einem der vorhergehenden Ansprüche, wobei die Drehmittel (21-27) das (die) drehbare(n) Teil(e) (45) mit einer Geschwindigkeit zwischen 4 und 40 Umdrehungen pro Minute drehen.

## Revendications

1. Broyeur pour récipients en verre comprenant une partie extérieure (1) qui entoure une partie intérieure (45) de manière à définir entre elles un espace annulaire de broyage (A) dont la section transversale se rétrécit depuis une extrémité supérieure jusqu'à une extrémité inférieure de l'espace, au moins une des parties extérieure et intérieure pouvant tourner autour de l'axe de l'espace de broyage; un moyen (21 à 27) de mise en rotation de la partie ou des parties rotative(s); une entrée (43) de récipients en verre à l'extrémité supérieure de l'espace de broyage; une sortie (7a) de fragments de verre à l'extrémité inférieure de l'espace de broyage; et au moins une saillie (55, 57) qui fait saillie dans l'espace de broyage depuis au moins l'une des parties extérieure et intérieure, caractérisé en ce que ladite saillie est en forme d'élément allongé (57), dont la longueur s'étend de façon continue ou intermittente le long de la surface de la, ou d'une, partie rotative (45), et qui agit, en conjonction avec le sens de rotation, pour amener le verre le long de l'espace annulaire (A) vers son extrémité inférieure plus étroite; et en ce que l'autre partie (1) comporte des saillies sous la forme d'un réseau de boulons (55) qui sont vissés à travers une paroi de cette partie, les saillies à partir des deux parties faisant saillie dans une partie convergente de l'espace de broyage.

2. Broyeur selon la revendication 1, dans lequel l'élément allongé est une saillie hélicoïdale (57).

3. Broyeur selon l'une quelconque des revendications précédentes, dans lequel la partie extérieure est une enveloppe fixe sensiblement cylindrique (1) et la partie intérieure est un rotor (45) avec une partie sensiblement tronconique (45b) divergeant vers le bas.

4. Broyeur selon l'une quelconque des revendications précédentes, dans lequel l'axe est sensiblement vertical.

5. Broyeur selon l'une quelconque des revendications précédentes, dans lequel le moyen de mise en rotation (21 à 27) fait tourner la partie ou les parties rotative(s) (45) à une vitesse comprise entre 4 et 40 tours par minute.
